# EUROPÄISCHE PATENTSCHRIFT

(11) **EP 3 408 144 B1**
(45) Veröffentlichungstag und Bekanntmachung des Hinweises auf die Patenterteilung: **08.04.2020**
(21) Anmeldenummer: 17700454.6
(22) Anmeldetag: 17.01.2017
(51) Int. Cl.: B60R 16/027, B60R 25/021, B60R 25/0215, B62D 15/02

(54) **LENKSÄULE MIT ELEKTRISCHER LENKUNGSVERRIEGELUNG**
STEERING COLUMN WITH AN ELECTRICAL STEERING LOCK
COLONNE DE DIRECTION À VERROUILLAGE ÉLECTRIQUE DE LA DIRECTION

(30) Priorität: 25.01.2016 DE 102016000635
(43) Veröffentlichungstag der Anmeldung: 05.12.2018
(73) Patentinhaber: thyssenkrupp Presta AG, 9492 Eschen (LI); thyssenkrupp AG, 45143 Essen (DE)
(72) Erfinder: SCHLEGEL, Ulrich, 7304 Maienfeld (CH); ILHAN, Deniz, 9464 Rüthi (CH)
(74) Vertreter: thyssenkrupp Intellectual Property GmbH
(86) Internationale Anmeldenummer: PCT/EP2017/050856
(87) Internationale Veröffentlichungsnummer: WO 2017/129439

(56) Entgegenhaltungen:
- EP-A1- 1 602 538
- DE-B4-102004 026 868

## Beschreibung

Die vorliegende Erfindung betrifft eine Lenksäule mit den Merkmalen des Oberbegriffs des Anspruchs 1.

Lenksäulen für Kraftfahrzeuge sind in vielen verschiedenen Bauformen bekannt. Allgemein üblich sind Lenksäulen, in denen eine Lenkwelle drehbar in einem Mantelrohr gelagert ist. Das Mantelrohr selbst ist in einer Kastenschwinge axial verstellbar gelagert. Die Kastenschwinge wiederum ist an einer fahrzeugseitig zu befestigenden Konsole schwenkbar gelagert, um eine Höhenverstellung des Lenkrades zu ermöglichen. Weiterhin sind Lenksäulen bekannt, bei welchen an der Lenksäule noch eine elektrische Servounterstützung vorgesehen ist, die unmittelbar auf die Lenkwelle wirkt.

Nahezu alle Lenksäulen weisen außerdem eine Verriegelungseinrichtung auf, das sogenannte Lenkschloss, die das abgestellte Fahrzeug gegen unbefugte Benutzung sichern soll. Solche Verriegelungseinrichtungen werden rein mechanisch über einen Schlüssel oder elektrisch durch einen Aktuator betätigt.

Aus dem Stand der Technik sind Lenksäulen mit elektrisch betätigter Lenkungsverriegelung bekannt. So zeigt z. B. die DE 199 27 542 B4 ein Lenkstockschaltermodul mit einem Lenkwinkelsensor und einer Lenksäulenverriegelung. Dabei wird das Lenkstockschaltermodul über die Lenksäulenverriegelung an der Lenksäule befestigt. Besondere technische Merkmale der Lenksäulenverriegelung sind diesem Dokument nicht zu entnehmen.

Der nächstkommende Stand der Technik ist aus der DE 10 2004 026 868 B4 bekannt. Dieses Patent offenbart zur genauen Messung des Lenkwinkels, also des Drehwinkels der Lenksäule, einen mit einem Stirnradgetriebe versehenen Lenkwinkelsensor. Das Stirnradgetriebe ermöglicht durch eine Untersetzung eine Erfassung des absoluten Lenkwinkels über einen weiten Drehbereich des Lenkrades über mehrere volle Umdrehungen hinweg. Weiterhin wird eine elektrische Lenkungsverriegelung offenbart, die mittels eines Sperrbolzens die Lenkwelle arretiert. Die Lenkungsverriegelung ist elektrisch betätigt. Als Aktuator ist ein Elektromotor vorgesehen. Der Lenkwinkelsensor und die Lenkwellenverriegelung sind in einem Modul zur Montage zusammengefasst. Der Lenkwinkelsensor und die Lenkwellenverriegelung sind dabei bezogen auf die Lenkwelle, die das Modul mittig durchsetzt, gegenüberliegend angeordnet.

Ausgehend von diesem Stand der Technik ist es Aufgabe der vorliegenden Erfindung, eine kompakte Bauweise für eine Lenksäule mit einer elektrischen Lenkungsverriegelung vorzuschlagen, bei der insbesondere eine Verringerung der Anzahl der Bauteile erzielt wird.

Diese Aufgabe wird von einer Lenksäule mit den Merkmalen des Anspruchs 1 gelöst.

Weil bei einer für ein Kraftfahrzeug vorgesehenen Lenksäule mit einer Lenkwelle, die in einer Kastenschwinge drehbar gelagert ist, mit einem drehfest mit der Lenkwelle verbundenen Rastelement und mit einem Verriegelungselement, das mit dem Rastelement zur zeitweisen Blockierung der Lenkwelle in Eingriff bringbar ist, und mit einer Sensoranordnung, die dazu eingerichtet ist, einen Lenkparameter, nämlich den Drehwinkel der Lenkwelle oder das auf die Lenkwelle wirkende Drehmoment, zu erfassen, sowie mit einem elektromechanischen Aktuator zur Betätigung des Verriegelungselements in Abhängigkeit von einer Steuerung, zusätzlich das Merkmal vorgesehen ist, dass die Sensoranordnung erste Sensoren für den Lenkparameter und wenigstens einen zweiten Sensor zur Erfassung der Lage des Verriegelungselements in einer baulichen Einheit umfasst, können die Sensoren für den Lenkparameter und für die Lage des Verriegelungselements gemeinsam montiert und/oder kontaktiert werden, so dass sich eine kompaktere Bauweise bei verringertem Montageaufwand ergibt.

Das Verriegelungselement kann dabei bevorzugt ein Rastbolzen sein, und das Rastelement ein auf der Lenkwelle drehfest befestigter Raststern.

Bei elektromechanischen Servolenkungen ist es von besonderem Vorteil, wenn die ersten Sensoren Hallsensoren eines Drehmomentsensors sind, weil ein Drehmomentsensor in der räumlichen Nähe des Verriegelungselements angebracht werden kann und die Steuerung der Servolenkung diese beiden elektrischen Komponenten gemeinsam auslesen und ansteuern kann.

Dabei wird eine besonders kompakte und kostengünstig zu fertigende Ausführung erzielt, wenn die bauliche Einheit, die die ersten Sensoren und den wenigstens einen zweiten Sensor umfasst, eine gemeinsame Platine ist, auf der die ersten Sensoren und der wenigstens eine zweite Sensor angeordnet sind.

In einer mit der erfindungsgemäßen Lenksäule ausgestatteten oder kombinierten Kraftfahrzeuglenkung ist bevorzugt ein elektromotorischer Servoantrieb vorgesehen, der an der Lenksäule oder an einem mit der Lenksäule wirkverbundenen Lenkgetriebe angeordnet ist, und der eine Steuerung aufweist, die dazu eingerichtet ist, Signale der Sensoranordnung als Eingangssignale zu erfassen und den Aktuator anzusteuern. So ist es möglich, die Steuerung in den Servoantrieb baulich zu integrieren. Es ist dabei vorteilhaft, wenn die Sensoranordnung und der Aktuator über eine gemeinsame elektrische Leitung mit der Steuerung des Servoantriebs verbunden sind, also die Sensor- und Verriegelungsbaugruppe über eine einzige elektrische Verbindung mit der Steuerung verbunden ist. Die Verbindung wird dabei zweckmäßig mehrpolig oder mehradrig sein, die Anzahl der Steckverbindungen wird jedoch minimiert, was Kosten und Montageaufwand sowie die Anzahl der möglichen Fehlerquellen verringert.

Außerdem kann auch die elektrische Stromversorgung des Aktuators über die gemeinsame elektrische Leitung erfolgen.

Ein einfacher, kompakter mechanischer Aufbau wird möglich, wenn das Verriegelungselement schwenkbar an oder verschieblich in der Kastenschwinge gelagert ist. Die im Betrieb, insbesondere im Missbrauchsfall, mechanisch auf das Verriegelungselement wirkenden Kräfte werden dann unmittelbar in die Kastenschwinge eingeleitet, so dass der Aktuator selbst kleiner und leichter ausgebildet werden kann, als wenn der Aktuator die genannten Kräfte aufnehmen müsste.

Vorzugsweise ist dabei das Verriegelungselement in einer Führung, insbesondere in einer Linearführung in der Kastenschwinge abgestützt.

Andere vorteilhafte Merkmale, die einzeln oder in Kombination miteinander bevorzugte Ausführungsformen der Erfindung darstellen können, ergeben sich auch aus der Figurenbeschreibung. Bevorzugte Ausführungsformen werden nachfolgend anhand der Zeichnungen näher erläutert. Es zeigen:
- Fig. 1:: eine elektromechanische Verriegelungseinheit für eine erfindungsgemäße Lenksäule in einer Explosionsdarstellung;
- Fig. 2:: die Verriegelungseinheit aus Fig. 1 ohne Gehäuse in der Montagestellung an einem Teil einer Lenkwelle;
- Fig. 3:: die Anordnung aus Fig. 2 in einer anderen Ansicht;
- Fig. 4:: die Anordnung aus Fig. 2 mit weiteren Gehäuseelementen;
- Fig. 5:: die Anordnung aus Fig. 4 mit einer montierten Kastenschwinge und einem elektrischen Servoantrieb, der auf die Lenkwelle wirkt;
- Fig. 6:: die Anordnung aus Fig. 5 in einer anderen Darstellung; sowie
- Fig. 7:: eine vollständig montierte Lenksäule mit Verstelleinrichtung und Konsole zur Montage in einem Kraftfahrzeug.

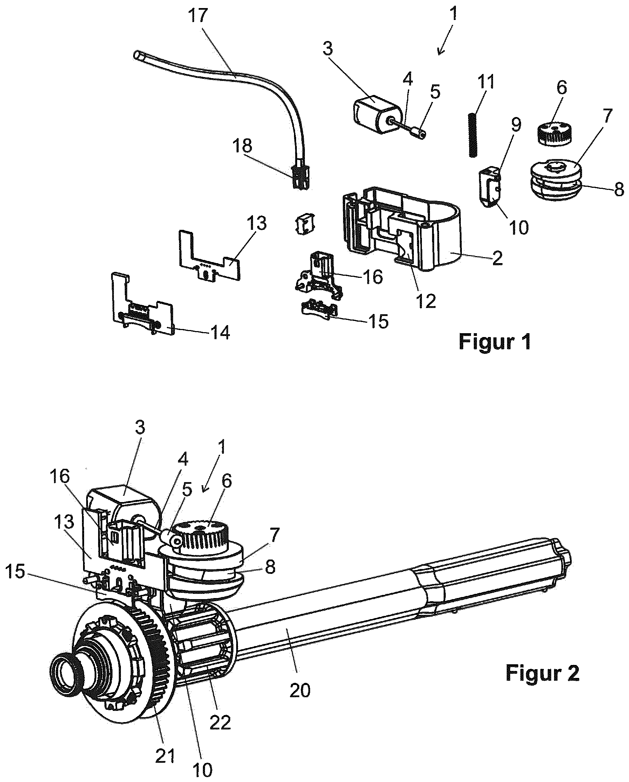

Die Figur 1 zeigt in einer Explosionsdarstellung eine elektromechanische Verriegelungseinheit 1 für eine Lenksäule eines Kraftfahrzeugs. Die Verriegelungseinheit 1 weist ein Gehäuse 2 auf, in dem ein Elektromotor 3 mit einer Motorwelle 4 und einem angetriebenen Schneckenrad 5 montiert ist. Das Schneckenrad 5 kämmt in montiertem Zustand mit einem Zahnrad 6, welches drehfest mit einem Kulissenrad 7 verbunden ist. Das Kulissenrad 7 weist umfangsseitig eine Kulisse 8 auf, in die in montiertem Zustand ein Mitnehmer 9 eines Rastbolzens 10 eingreift. Der Rastbolzen 10 ist mittels einer Schraubenfeder 11 in die in Figur 1 nach unten weisende Richtung vorgespannt. Das Zahnrad 6 und das Kulissenrad 7 sind in dem Gehäuse 2 drehbar gelagert.

Weiter trägt das Gehäuse 2 einen Montagebereich 12 für eine Leiterplatte 13 und eine Abdeckplatte 14. In dem Montagebereich 12 sind außerdem ein magnetischer Flusssammler 15 sowie eine elektrische Kontaktierung 16 angeordnet. Die elektrische Kontaktierung 16 ist als Steckverbindung ausgeführt und dient zum Anschluss einer elektrischen Leitung 17 mittels eines mehrpoligen Steckers 18, wobei die elektrische Leitung 17 nicht Teil der Baugruppe der elektromechanischen Verriegelungseinheit 1 ist.

Der montierte Zustand der elektromagnetischen Verriegelungseinheit 1 an einer Lenkwelle 20 ist in der Figur 2 veranschaulicht, wobei das Gehäuse 2 zur besseren Übersichtlichkeit weggelassen wurde. Gleiche oder funktionsgleiche Bauelemente tragen hier, wie auch in der weiteren Figurenbeschreibung, gleiche Bezugsziffern. Zur besseren Übersichtlichkeit können einige Bezugsziffern nicht wiederholt aufgeführt sein.

Die Figur 2 zeigt also die Verriegelungseinheit 1 mit dem Elektromotor 3, der über die Motorwelle 4 und das Schneckenrad 5 das Zahnrad 6 antreibt. Das Zahnrad 6 wiederum treibt das Kulissenrad 7 an, in dessen Kulisse 8 der hier nicht sichtbare Zapfen 9 des Rastbolzens 10 eingreift. Das Kulissenrad 7 ist in unmittelbarer Nähe der Leiterplatte 13 angeordnet. Die Leiterplatte 13 ist wiederum mit dem Flusssammler 15 zusammen unmittelbar neben einem Drehwinkelgeber 21 montiert, so dass der Drehwinkelgeber 21, dessen Magnetfeld über den Flusssammler 15 geleitet und konzentriert wird, ein magnetisches Feld an erste Sensoren auf der Leiterplatte 13 abgibt. Die ersten Sensoren sind dazu geeignet und eingerichtet, die Winkelposition des Drehwinkelgebers 21 und der damit verbundenen Lenkwelle 20 zu erfassen und auszuwerten. Je nach Ausführung kann dies als Lenkwinkelsensor oder als Lenkdrehmomentsensor vorgesehen sein. In der hier dargestellten Ausführungsform handelt es sich um einen Drehmomentsensor.

Die Leiterplatte 13 trägt weiter einen zweiten Sensor (hier nicht sichtbar), der die Position des Kulissenrades 7 abfragt. Es wird nur die Endstellung des Kulissenrades 7, also die Endposition in beiden Drehrichtungen, abgefragt. Durch die mechanische Zwangskopplung des Kulissenrades 7 mit dem Rastbolzen 10 ist damit auch die Position des Rastbolzens 10 in den Endlagen erfassbar.

Die Lenkwelle 20 trägt weiter einen Raststern 22, in dem der Rastbolzen 10 in bekannter Weise eingreifen kann, um die Lenkwelle zu arretieren und damit einen Lenkvorgang zu unterbinden, um eine unbefugte Benutzung des Kraftfahrzeugs auch im Wege des Schiebens oder Abschleppens zu verhindern. Dazu kann der Elektromotor 3 bestromt werden. In einer ersten Drehrichtung des Elektromotors 3 kann der Rastbolzen 10 in dem Raststern 22 hineingefahren werden, so dass die Lenkwelle 20 blockiert wird. Bei Bestromung in entgegengesetzter Richtung fährt der Elektromotor 3 den Rastbolzen 10 aus dem Raststern 22 heraus und gibt die Lenkwelle 20 damit frei. Die Erkennung der Endlagen mit dem zweiten Sensor ermöglicht einerseits die Auswertung des Signals für Steuerungszwecke und andererseits die Abschaltung des Elektromotors 3 bei Erreichen der jeweils angestrebten Endlage, so dass der Elektromotor 3 nicht unnötig lange bestromt werden muss, andererseits aber die Endlage zuverlässig erreicht wird und dies auch geprüft werden kann.

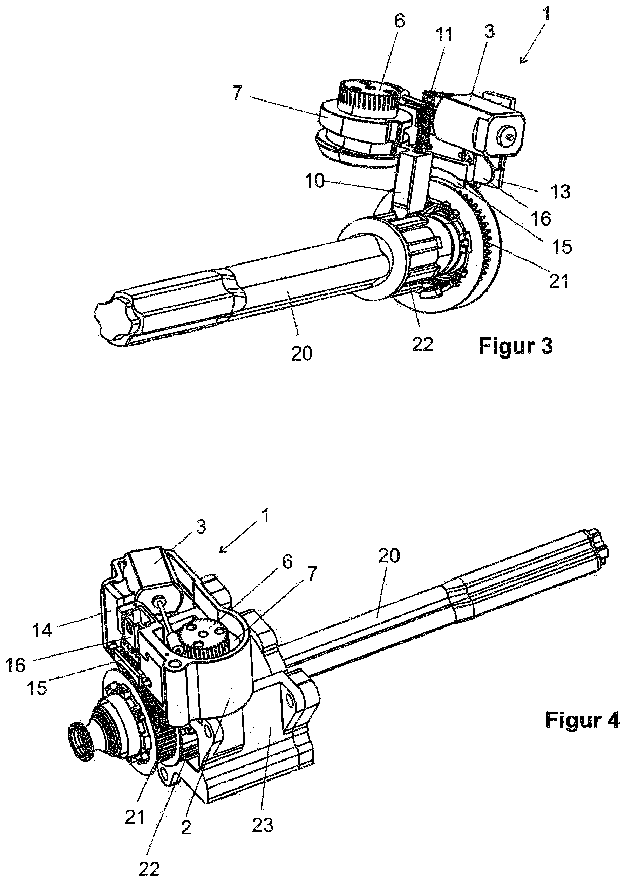

Die Figur 3 zeigt die Anordnung aus Figur 2 in einer anderen Ansicht. Es ist ersichtlich, dass der Rastbolzen 10, der hier in seiner Eingriffsstellung in dem Raststern 22 dargestellt ist, dass nicht dargestellte Gehäuse 2 auf den Raststern zu durchgreift. Angesichts der erheblichen Kräfte, die auf eine Lenkwellenverriegelung im Missbrauchsfall wirken, ergibt sich hieraus, dass die Lagerung des Rastbolzens 10 nicht vollständig in der Verriegelungseinheit 1 erfolgen kann. Dies wird nachfolgend noch näher erläutert.

Die Figur 4 zeigt die Lenksäule aus den Figuren 2 und 3 in einer perspektivischen Darstellung mit weiteren Komponenten. Gegenüber der Darstellung der Figuren 2 und 3 ist hier das Gehäuse 2 der Verriegelungseinheit 1 dargestellt. Das Gehäuse 2 trägt und lagert den Elektromotor 3 sowie die übrigen in Figur 1 dargestellten Bauteile. Das Gehäuse 2 selbst ist auf einem Gehäuseteil 23 angeordnet, welches Teil der Lenksäule ist und eine Lagerung der Lenkwelle 20 aufweisen kann, derart, dass die Lenkwelle 20 in dem Gehäuseteil 23 drehbar gelagert ist. Insbesondere umgibt das Gehäuseteil 23 umfangseitig auch den Raststern 22 und lagert den in dieser Darstellung nicht sichtbaren Rastbolzen 10 derart, dass der Rastbolzen 10 in einer im Wesentlichen radialen Richtung auf den Raststern 22 zu verschiebbar ist, dass auftretende Querkräfte, die von dem Raststern bei einer manuellen Drehbewegung der Lenkwelle 20 ausgeübt werden, aber von dem Gehäuseteil 23 aufgenommen werden können, ohne dass eines der Bauteile beschädigt wird. Auch hier wird deutlich, dass das Gehäuse 2 mit seiner dünnwandigen und entsprechend leichten Ausgestaltung für die Aufnahme solcher Kräfte im Missbrauchsfall nicht ausreichend dimensioniert ist.

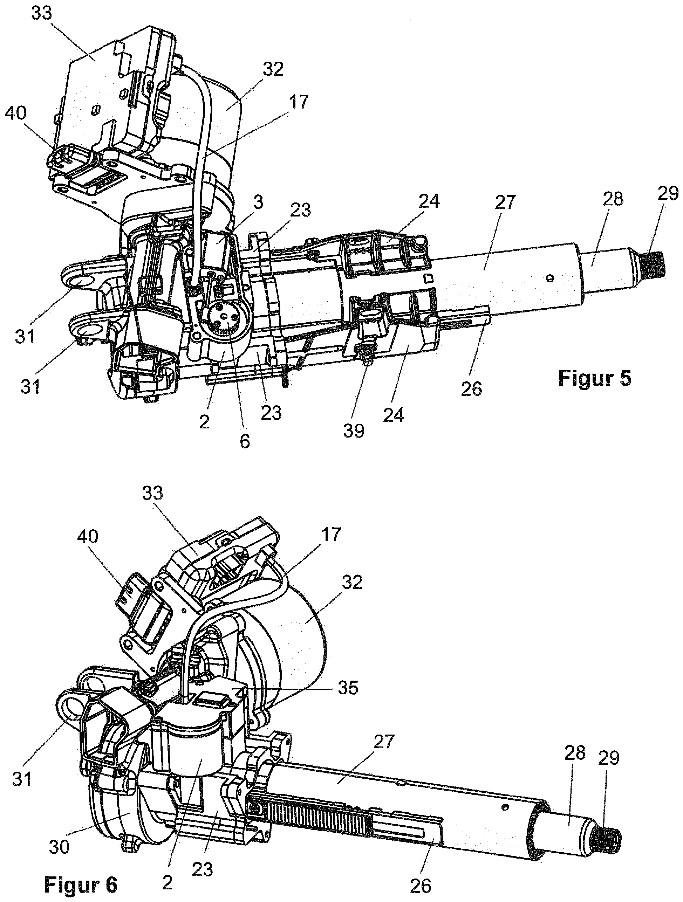

Die Figur 5 zeigt eine weitere Zusammenbaustufe der Lenksäule aus Figur 4. Die Baugruppe aus Figur 4 ist hier um weitere Bauteile ergänzt. So ist insbesondere unmittelbar an das Gehäuseteil 23 ein zweites Gehäuseteil 24 montiert, welches eine an sich bekannte Verstelleinrichtung 25 für die Höhenverstellung der Lenksäule und eine ebenso bekannte Verstelleinrichtung 26 für die axiale Verstellung der Lenksäule umfasst. Das zweite Gehäuseteil 24 trägt auch ein äußeres Mantelrohr 27, in dem ein lenkradseitiger Teil 28 der gesamten Lenkwelle drehbar gelagert ist. Der lenkradseitige Teil 28 weist eine Verzahnung 29 zur Montage eines Lenkrades auf. Die Lenkwelle 20 in Figur 4 weist ein unrundes, insbesondere etwa kleeblattförmiges äußeres Profil auf. Der Lenkwellenteil 28 weist ein entsprechend kompatibles inneres Profil auf, so dass die beiden Lenkwellenteile 20 und 28 ineinander greifen können und eine drehfeste, aber teleskopierbare Anordnung bilden. An dem gegenüberliegenden Ende der Lenksäule ist ein weiteres Gehäuseteil 30 angeordnet, welches einerseits Lagerstellen 31 für die schwenkbare Lagerung der Lenksäule an einer Konsole 37 in einem Kraftfahrzeug trägt und welches andererseits eine Lagerung für eine Antriebswelle eines Servoantriebs 32 trägt. Die Antriebswelle, deren Lagerung und das Getriebe zur Kopplung des Servoantriebs an die Lenkwelle 20, sind aus dem Stand der Technik bekannt und hier nicht näher dargestellt.

Die Gehäusteile 23, 24 und 30 bilden zusammen mit anderen kleineren Bauteilen die sogenannte Kastenschwinge, die zum einen als wesentliches tragendes Bauteil der Lenksäule die Lagerung der Lenkwelle 20 aufnimmt und die zum anderen die oben genannten Verstellmöglichkeiten in Vertikalrichtung (vom Fahrer aus gesehen) und in Axialrichtung der Lenksäule ermöglicht. Die Bezeichnung "Kastenschwinge" ergibt sich aus dem kastenförmigen Aufbau und der endseitigen Lagerung in den Lagerstellen 31, die diese Baugruppe wie eine Schwinge an einer Konsole 37 schwenkbar lagert.

Der Servoantrieb 32 weist üblicherweise einen bürstenlosen Elektromotor auf, der von einer Steuerung 33 angesteuert wird. Bei diesem Ausführungsbeispiel ist die Steuerung 33 über die Leitung 17, die bereits oben mit Bezug auf Figur 1 beschrieben wurde, mit der Verriegelungseinheit 1 verbunden. Über die Leitung 17 werden die ersten Sensoren des Drehmomentsensors und die zweiten Sensoren für die Abfrage der Endlagen der Lenkungsverriegelung abgefragt. Außerdem wird über das Kabel 17 die Versorgungsspannung für den Elektromotor 3 der Verriegelungseinheit 1 geleitet. Aus diesem Ausbau ergeben sich mehrere Vorteile, die konstruktiv genutzt werden können. Zum einen ist nur eine elektrische Verbindung zwischen der Verriegelungseinheit 1 und der Steuerung 33 erforderlich, was Kosten und Montagezeit minimiert. Zum anderen liegen die Daten des Drehmomentsensors und der Verriegelung (Endlagensensor) über dieselbe Kabel- oder Steckverbindung in der Steuerung 33 vor. Der Aufbau der Verriegelungseineheit 1 kann mit leichten Materialien erfolgen, da die wesentlichen Kräfte, die im Missbrauchsfall auftreten, von dem Rastbolzen 10 nicht in das Gehäuse 2 der Verriegelungseinheit 1 eingeleitet werden, sondern in das Gehäuseteil 23 der Kastenschwinge. Dementsprechend kann die Verriegelungseinheit 1 relativ leicht und klein aufgebaut werden. Der Elektromotor 3 kann deshalb ebenfalls klein gehalten werden und mit geringem Strom angetrieben werden. Auch dieses Merkmal ist vorteilhaft, da die elektrische Verbindung 17 nur entsprechend geringe Ströme übertragen muss und deshalb nur geringe Leitungsquerschnitte benötigt werden.

Die Figur 6 zeigt eine weitere Baustufe der erfindungsgemäßen Lenksäule. In dieser Baustufe ist das Gehäuse 2 an seiner Oberseite mit einem Deckel 35 verschlossen. Das Gehäuseteil 24 ist in dieser Darstellung nicht vorhanden.

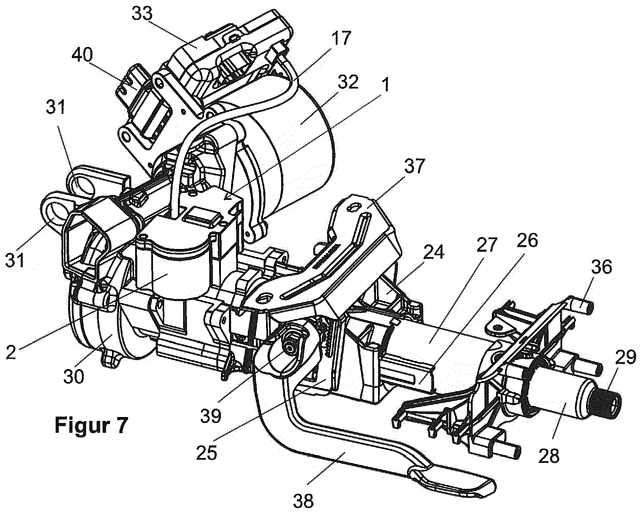

Der vollständige Zusammenbau der Lenksäule ist in Figur 7 dargestellt. Die Lenksäule ist gegenüber der Darstellung aus Figur 6 weiter komplettiert mit einem Montagesockel 36 für die Lenkstockschalter des Fahrzeugs, mit einer Konsole 37 zur Befestigung der Lenksäule am Chassis eines Fahrzeugs, sowie mit einem Spannhebel 38, der sowohl die vertikale Verstellung 25 als auch die axiale Verstellung 26 über einen Spannbolzen 39 wahlweise löst oder verriegelt. Bei der Lenksäule, wie sie in der Figur 7 dargestellt ist, sind bereits alle Komponenten für die elektrische Servounterstützung (Motor 32 und Steuerung 33) ebenso wie die elektromechanische Verriegelungseinheit 1 montiert. Der für die Steuerung des Servoantriebs erforderliche Drehmomentsensor ist in der oben beschriebenen Weise realisiert. Die Kontaktierung des Drehmomentsensors und der elektromechanischen Verriegelungseinheit 1 erfolgt über ein einziges Kabel 17, das bereits in der endgültigen Weise an der Lenksäule angebracht ist und die Steuerung 32 mit der Verrigelungseinheit 1 sowie mit dem zugeordneten Drehmomentsensor verbindet. Diese Verbindung kann deshalb bereits bei der Montage der Lenksäule vor dem Einbau an das Kraftfahrzeug erstellt und getestet werden. Für die endgültige Kontaktierung nach der Montage der Lenksäule im Kraftfahrzeug ist nur noch eine einzige Steckverbindung 40 an der Steuerung 33 vorgesehen.

Die so beschriebene Lenksäule ist deshalb in ihrem Aufbau kompakt, leicht und mit geringem Aufwand in einem Kraftfahrzeug zu montieren. Die Funktion ist besonders zuverlässig, da der gesamte Zusammenbau insbesondere des Sensors für den Lenkungsparameter (hier: Drehmoment) und die elektromechanische Verriegelung bereits beim Hersteller der Lenksäule montiert und getestet werden kann.

Die genannten Vorteile ergeben sich im Wesentlichen auch dann, wenn der Servoantrieb anders als in dem dargestellten Ausführungsbeispiel nicht an der Lenksäule, sondern an dem Lenkgetriebe im Bereich der Vorderachse angeordnet ist. Auch in diesem Fall ergeben sich Vorteile durch die gemeinsame Montage der Sensoren auf einer gemeinsamen Leiterplatte und die einheitliche Kontaktierung der Sensoren un der elektromechanischen Verriegelung über eine einzige elektrische Verbindung.

## Patentansprüche

1. Lenksäule für ein Kraftfahrzeug,
- mit einer Lenkwelle (20, 28), die in einer Kastenschwinge drehbar gelagert ist,
- mit einem drehfest mit der Lenkwelle (20) verbundenen Rastelement (22) und
- mit einem Verriegelungselement (10), das mit dem Rastelement (22) zur zeitweisen Blockierung der Lenkwelle (20) in Eingriff bringbar ist,
- mit einer Sensoranordnung, die dazu eingerichtet ist, einen Lenkparameter, nämlich den Drehwinkel der Lenkwelle oder das auf die Lenkwelle wirkende Drehmoment, zu erfassen, und
- mit einem elektromechanischen Aktuator zur Betätigung des Verriegelungselements (10) in Abhängigkeit von einer Steuerung (33),
**dadurch gekennzeichnet, dass**
die Sensoranordnung erste Sensoren für den Lenkparameter und wenigstens einen zweiten Sensor zur Erfassung der Lage des Verriegelungselements (10) in einer baulichen Einheit umfasst.

2. Lenksäule nach Anspruch 1, **dadurch gekennzeichnet, dass** die ersten Sensoren Hallsensoren eines Drehmomentsensors sind.

3. Lenksäule nach einem der vorhergehenden Ansprüche, **dadurch gekennzeichnet, dass** die bauliche Einheit, die die ersten Sensoren und den wenigstens einen zweiten Sensor zur Erfassung der Lage des Verriegelungselements (10) umfasst, eine gemeinsame Platine (13) ist, auf der die ersten Sensoren und der wenigstens eine zweite Sensor angeordnet sind.

4. Lenksäule nach einem der vorhergehenden Ansprüche, **dadurch gekennzeichnet, dass** ein elektromotorischer Servoantrieb (32) vorgesehen ist, der an der Lenksäule oder an einem mit der Lenksäule wirkverbundenen Lenkgetriebe angeordnet ist, und der die Steuerung (33) aufweist, die dazu eingerichtet ist, Signale der Sensoranordnung als Eingangssignale zu erfassen und den Aktuator anzusteuern.

5. Lenksäule nach einem der vorhergehenden Ansprüche, **dadurch gekennzeichnet, dass** die Sensoranordnung und der Aktuator über eine gemeinsame elektrische Leitung (17) mit der Steuerung (33) des Servoantriebs (32) verbunden sind.

6. Lenksäule nach einem der vorhergehenden Ansprüche, **dadurch gekennzeichnet, dass** die elektrische Stromversorgung des Aktuators über die gemeinsame elektrische Leitung (17) erfolgt.

7. Lenksäule nach einem der vorhergehenden Ansprüche, **dadurch gekennzeichnet, dass** das Verriegelungselement (10) schwenkbar an oder verschieblich in der Kastenschwinge gelagert ist.

8. Lenksäule nach einem der vorhergehenden Ansprüche, **dadurch gekennzeichnet, dass** das Verriegelungselement (10) in einer Führung in der Kastenschwinge abgestützt ist.

## Claims

1. Steering column for a motor vehicle
- having a steering shaft (20, 28) which is rotatably mounted in a boxed swing arm,
- having a latching element (22) connected to the steering shaft (20) in a torsion-resistant manner and
- having a locking element (10) which may be brought into engagement with the latching element (22) for temporary blocking of the steering shaft (20),
- having a sensor arrangement, which is designed to detect a steering parameter, namely the angle of rotation of the steering shaft or the torque acting on the steering shaft, and
- having an electromechanical actuator for actuating the locking element (10) depending on a control (33),
**characterized in that**
the sensor arrangement comprises first sensors for the steering parameter and at least one second sensor for detecting the position of the locking element (10) in a structural unit.

2. Steering column according to Claim 1, **characterized in that** the first sensors are Hall sensors of a torque sensor.

3. Steering column according to one of the preceding claims, **characterized in that** the structural unit, which comprises the first sensors and the at least one second sensor for detecting the position of the locking element (10), is a common printed circuit board (13) on which the first sensors and the at least one second sensor are arranged.

4. Steering column according to one of the preceding claims, **characterized in that** an electromotive servo drive (32) is provided, which is arranged on the steering column or on a steering gear operatively connected to the steering column and which comprises the control (33) which is designed to detect signals of the sensor arrangement as input signals and to control the actuator.

5. Steering column according to one of the preceding claims, **characterized in that** the sensor arrangement and the actuator are connected to the control (33) of the servo drive (32) via a common electrical line (17).

6. Steering column according to one of the preceding claims, **characterized in that** the electrical power supply of the actuator is realized via the common electrical line (17).

7. Steering column according to one of the preceding claims, **characterized in that** the locking element (10) is pivotably or displaceably mounted in the boxed swing arm.

8. Steering column according to one of the preceding claims, **characterized in that** the locking element (10) is supported in a guide in the boxed swing arm.

## Revendications

1. Colonne de direction destinée à un véhicule automobile, ladite colonne de direction comprenant
- un arbre de direction (20, 28) qui est monté de manière rotative dans un bras oscillant de caisse,
- un élément d'encliquetage (22) relié solidairement en rotation à l'arbre de direction (20) et
- un élément de verrouillage (10) pouvant être amené en engagement avec l'élément d'encliquetage (22) pour bloquer temporairement l'arbre de direction (20),
- un ensemble de capteurs conçu pour détecter un paramètre de direction, à savoir l'angle de rotation de l'arbre de direction ou le couple agissant sur l'arbre de direction, et
- un actionneur électromécanique destiné à actionner l'élément de verrouillage (10) en fonction d'une commande (33),
**caractérisée en ce que**
l'ensemble de capteurs comprend des premiers capteurs destinés au paramètre de direction et au moins un deuxième capteur destiné à détecter la position de l'élément de verrouillage (10) dans une unité structurelle.

2. Colonne de direction selon la revendication 1, **caractérisée en ce que** les premiers capteurs sont des capteurs à effet Hall d'un capteur de couple.

3. Colonne de direction selon l'une des revendications précédentes, **caractérisée en ce que** l'unité structurelle, qui comprend les premiers capteurs et l'au moins un deuxième capteur de détection de la position de l'élément de verrouillage (10), est une carte de circuit imprimé commune (13) sur laquelle sont disposés les premiers capteurs et l'au moins un deuxième capteur.

4. Colonne de direction selon l'une des revendications précédentes, **caractérisée en ce qu'**un servomécanisme d'entraînement électromoteur (32) est prévu qui est disposé au niveau de la colonne de direction ou d'un mécanisme de direction relié fonctionnellement à la colonne de direction et qui comporte la commande (33) adaptée pour détecter des signaux de l'ensemble de capteurs en tant que signaux d'entrée et pour commander l'actionneur.

5. Colonne de direction selon l'une des revendications précédentes, **caractérisée en ce que** l'ensemble de capteurs et l'actionneur sont reliés à la commande (33) du servomécanisme d'entraînement (32) par une ligne électrique commune (17).

6. Colonne de direction selon l'une des revendications précédentes, **caractérisée en ce que** l'alimentation électrique de l'actionneur s'effectue par la ligne électrique commune (17).

7. Colonne de direction selon l'une des revendications précédentes, **caractérisée en ce que** l'élément de verrouillage (10) est monté de manière pivotante ou coulissante dans le bras oscillant de caisse.

8. Colonne de direction selon l'une des revendications précédentes, **caractérisée en ce que** l'élément de verrouillage (10) est en appui dans un guide situé dans le bras oscillant de caisse.
